# FASCICULE DE BREVET EUROPEEN

(11) **EP 2 210 131 B1**
(45) Date de publication et mention de la délivrance du brevet: **25.01.2012**
(21) Numéro de dépôt: 08871352.4
(22) Date de dépôt: 04.11.2008
(51) Int. Cl.: G02C 7/10, B29D 11/00, G02B 1/04

(54) **NOUVEAU SUBSTRAT OPTIQUE TRANSPARENT, SON PROCEDE D'OBTENTION, ET SON APPLICATION COMME ELEMENT D'OPTIQUE**
NEUARTIGES TRANSPARENTES OPTISCHES SUBSTRAT, VERFAHREN ZU SEINER GEWINNUNG UND VERFAHREN ZU SEINER ANWENDUNG ALS OPTISCHES ELEMENT
NOVEL TRANSPARENT OPTICAL SUBSTRATE, METHOD FOR OBTAINING IT, AND METHOD OF APPLYING IT AS AN OPTICAL ELEMENT

(30) Priorité: 16.11.2007 FR 0708040
(43) Date de publication de la demande: 28.07.2010
(73) Titulaire: Christian Dalloz Sunoptics Société par Actions Simplifiée (SAS), 39206 Saint-Claude Cedex (FR)
(72) Inventeur: MEILLAT, Hervé, F-39200 Avignon lès Saint-Claude (FR); BOYER, Nathalie, F-01410 Mijoux (FR); PARENT, Nicolas, F-39200 Saint-Claude (FR)
(74) Mandataire: Gallochat, Alain
(86) Numéro de dépôt international: PCT/FR2008/001548
(87) Numéro de publication internationale: WO 2009/092906

(56) Documents cités:
- EP-A- 1 306 412
- WO-A-00/61043
- WO-A-03/085445
- WO-A-2004/055573
- FR-A1- 2 328 668
- US-A- 4 989 967
- US-A- 5 550 599
- US-A- 5 626 661
- US-A- 5 767 933
- US-A1- 2004 150 787

## Description

La présente invention concerne un nouveau substrat optique transparent, son procédé d'obtention, et son application comme élément d'optique.

Des éléments d'optique dans la masse desquels, ou à la surface desquels sont disposées des paillettes sont connus ; les paillettes utilisées sont alors opaques et sont davantage destinées à la décoration de l'élément d'optique puisqu'elles peuvent par exemple être disposées sur les branches de lunettes ou bien former des motifs sur les verres desdites lunettes.

De même il est connu des lentilles de contact dont la partie recouvrant l'iris est dotée de paillettes donnant auxdites lentilles de contact un effet purement décoratif au niveau du seul iris, lesdites paillettes étant absentes du champ visuel de l'utilisateur.

La présente invention procède d'une toute autre approche ; les éléments intégrés dans le substrat sont destinés à produire un effet visuel lumineux spécifique à savoir une brillance et un scintillement sous certaines conditions de luminosité.

Il est par exemple connu par le brevet US 4 989 967 un substrat contenant des éléments réfléchissants ou fluorescents, mais les éléments ou paillettes contenus dans le substrat optique ne correspondent pas aux éléments faisant l'objet de la présente invention s'agissant de leurs caractéristiques (composition, dimensions, concentration), et ne donnent pas les mêmes effets que ceux obtenus pour le substrat optique faisant l'objet de la présente invention.

L'objectif visé par la présente invention est de fournir un substrat optique ou un élément d'optique tel que défini ci-après produisant un scintillement, uniquement sous l'effet d'une luminosité de moyenne à forte intensité, sans pour autant gêner la vision de l'utilisateur ; en cas de faible luminosité, ce scintillement ne sera pas détectable par un observateur et les éléments contenus dans ledit substrat ne seront pas visibles par cet observateur.

Au sens de la présente invention, on entend par substrat optique un matériau destiné à être regardé par transparence par un utilisateur ; le matériau auquel il est fait référence dans la présente description est du type généralement utilisé dans les domaines de l'optique et peut ainsi consister en du verre minéral ou une matière organique telle que du polycarbonate, du polyamide, ou bien une résine thermoplastique ou thermodurcissable. Ce substrat pourra ainsi se présenter sous forme d'un écran, mais pourra aussi avantageusement consister en un élément d'optique.

Au sens de la présente invention, un élément d'optique est un dispositif destiné à être placé devant les yeux d'un utilisateur, à savoir des verres de lunettes, notamment de lunettes solaires, ou bien des visières de masques ou de casques, par exemple à usage sportif ou professionnel, mais aussi dans la protection des motards ou des motocyclistes. Ainsi, les verres de lunettes auxquels la présente description fait référence peuvent-ils être solaires ou non et/ou correcteurs ou non.

Le substrat optique selon la présente invention, du type composé d'un matériau dans lequel sont répartis des éléments transparents réfléchissants, où lesdits éléments sont répartis de façon aléatoire dans le volume dudit substrat, y compris dans le champ visuel de l'utilisateur dudit substrat, est caractérisé en ce que lesdits éléments ont une forme oblongue ayant une largeur comprise entre 10 et 30 microns et une longueur comprise entre 100 et 300 microns, pour une épaisseur de 0,5 à 1,5 micron, lesdits éléments présentant une concentration dans le substrat de quelques ppm à quelques dizaines de ppm.

Préférentiellement, lesdits éléments ont une largeur de 20 microns et une longueur de 200 microns, l'épaisseur étant de 1 micron.

Avantageusement lesdits éléments sont présents dans le substrat à raison d'une dizaine de ppm.

Selon un mode préférentiel de l'invention lesdits éléments seront en borosilicate de calcium et d'aluminium.

De façon préférentielle, un traitement de surface des éléments sera prévu, consistant en un dépôt d'oxydes métalliques sur lesdits éléments.

L'invention sera mieux comprise à la lecture de la description qui va suivre, référence étant faite aux figures parmi lesquelles :
- la figure 1 représente en coupe un substrat traditionnel,
- la figure 2 représente en coupe un substrat selon la présente
- invention, et
- la figure 3 représente en coupe un autre substrat non couvert par les revendications.

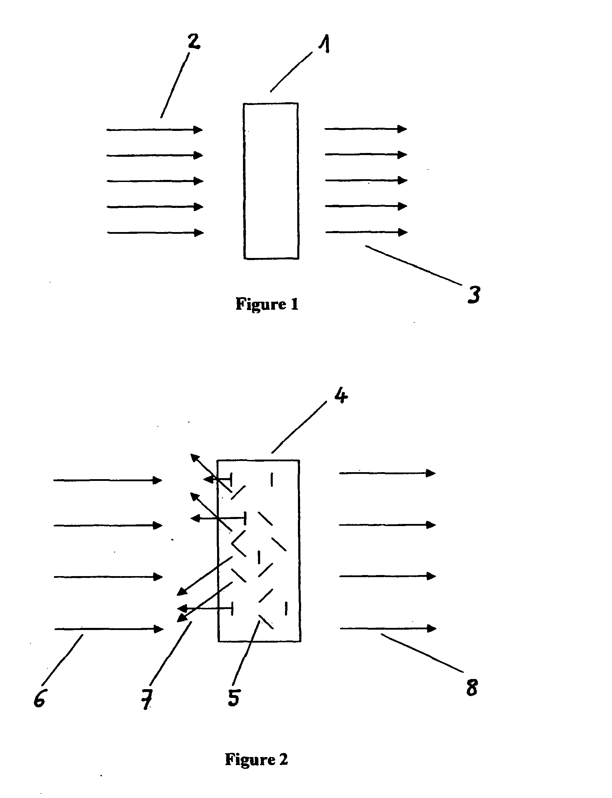

La figure 1 représente en coupe un substrat traditionnel (1) sur lequel vient frapper une lumière incidente (2) et qui laisse passer une lumière transmise (3). Une partie de la lumière (2) sera absorbée par les éventuels pigments / colorants contenus dans le substrat (1).

La figure 2 représente en coupe un substrat (4) selon la présente invention dans lequel sont répartis de façon aléatoire des éléments (5) transparents, réfléchissants et/ou ayant subi un traitement de surface afin de les rendre réfléchissants à la lumière ou davantage réfléchissants à la lumière, de sorte que la lumière incidente (6) se trouve en partie réfléchie (7) et en partie transmise (8), une autre partie de cette lumière incidente (6) se trouvant par ailleurs absorbée par les pigments / colorants lorsque ledit substrat (4) en contient.

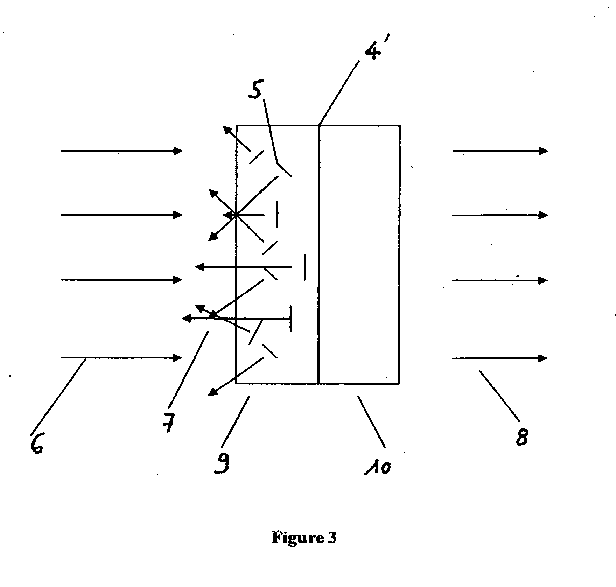

La figure 3 représente en coupe un substrat globalement référencé (4') se composant de deux couches (9), (10) réalisées chacune en un matériau tel que défini précédemment, et où la répartition des éléments (5) n'est plus homogène dans le volume du substrat ainsi que cela était représenté à la figure 2. Dans l'exemple représenté à la figure 3, les éléments (5) sont regroupés dans la couche (9), c'est-à-dire la partie du substrat se situant du côté de l'observateur, la couche (10) étant située du côté de l'utilisateur. Le matériau constituant la couche (9) peut être identique dans sa composition au matériau constituant la couche (10), mais ces matériaux peuvent également être de compositions différentes.

Diverses variantes sont possibles ; selon une variante non illustrée ici, le substrat peut comporter plus de deux couches. De même, les éléments (5) peuvent être regroupés dans une seule couche comme cela est représenté à la figure 3, mais il est aussi possible de réaliser des substrats à plusieurs couches où la concentration est différente d'une couche à l'autre, sans pour autant que lesdits éléments (5) soient regroupés dans une seule couche ; il est également possible de prévoir des éléments (5) dont la nature varie selon la couche dans laquelle ils se trouvent.

L'orientation des éléments (5) est aléatoire, de sorte que chaque élément va réfléchir la lumière incidente (6) dans une direction privilégiée représentée par les flèches (7). Grâce à cet agencement, un observateur se trouvant sur le trajet de la lumière réfléchie (7) percevra un effet visuel lumineux lorsque la lumière incidente (6) sera de moyenne ou de forte intensité, telle que celle provenant du soleil ou d'une lampe halogène. En l'absence d'une telle lumière moyenne ou de forte intensité, les éléments (5) ne seront pas visibles par un observateur, de sorte que lesdits éléments n'apporteront aucun aspect décoratif au substrat selon la présente invention. Cet effet visuel lumineux sera un effet de brillance et de scintillement lorsque la position dudit observateur variera par rapport au substrat (4). Ainsi, l'effet dépendra à la fois de l'angle d'incidence de la lumière (6) et de la position dudit observateur.

Les caractéristiques des éléments (5) sont choisies de telle sorte qu'en transmission lesdits éléments ne sont pas visibles à l'oeil nu, la lumière transmise (8) étant la même que celle transmise par le substrat sans éléments illustré à la figure 1 ; en revanche, en réflexion, lesdits éléments (5) sont rendus visibles par réflexion de la lumière incidente (6) sur lesdits éléments (5). Ainsi, lorsque ledit substrat (4) constitue un élément d'optique tel que précédemment défini, l'effet visuel lumineux est imperceptible pour le porteur dudit élément d'optique. Il est en effet essentiel que l'utilisateur ne soit pas gêné par la présence de ces éléments (5) alors même que des éléments (5) se trouvent dans son champ visuel. En outre, la transmission de la lumière à travers le substrat (4) ne sera pas significativement modifiée par les éléments (5). Pour répondre à ces différentes exigences, ces éléments (5) sont réalisés en un matériau transparent, tel que le borosilicate de calcium et d'aluminium, naturellement réfléchissant ou ayant éventuellement subi un traitement de surface procurant ou renforçant cet aspect réfléchissant par exemple grâce à un dépôt d'oxydes métalliques, tels que notamment TiO₂ ou SnO₂. Ce traitement peut également consister en un dépôt de métal, de métalloïde, ou d'oxyde de métalloïde tel que SiO₂ ; selon la couleur que l'on souhaite voir donner au scintillement, on choisira le ou les produits appropriés (métaux, métalloïde ou leurs oxydes), ledit scintillement pouvant être, selon le choix desdits produits, de couleur cuivre, or, bleue, verte, rouge, turquoise, rose ou blanche. Cette couleur variera selon l'épaisseur de la ou des couches desdits produits choisis ; elle variera également selon le nombre de couches appliquées utilisant divers de ces produits. Le traitement de surface précité est nécessaire lorsque les éléments (5) ne sont pas par eux-mêmes réfléchissants ; il est également apparu intéressant de faire subir un tel traitement de surface aux éléments (5) qui sont déjà réfléchissants en eux-mêmes, mais pour lesquels on souhaite encore renforcer ce caractère réfléchissant à la lumière.

Selon la présente invention, les éléments (5) ont une forme oblongue dont la largeur se situe entre 10 et 30 microns, préférentiellement de l'ordre de 20 microns, et dont la longueur se situe entre 100 et 300 microns, préférentiellement de l'ordre de 200 microns. L'épaisseur de tels éléments (5) se situe entre 0,5 et 1,5 micron, et est préférentiellement de l'ordre de 1 micron. En outre, la concentration au niveau pondéral de ces éléments au sein dudit substrat se situe entre quelques ppm (parties par million) et quelques dizaines de ppm par rapport au poids du matériau constituant ledit substrat ; selon une variante préférée de l'invention, ladite concentration est de l'ordre de la dizaine de ppm. Il est en effet apparu que, de façon surprenante, l'effet de scintillement recherché dans les conditions de luminosité précitées, sans altérer la vision de l'utilisateur, ne pouvait être obtenu qu'en utilisant à la fois cette fourchette de dimensions des éléments (5) et cette fourchette de concentration desdits éléments.

La présente invention concerne également un procédé d'obtention du substrat faisant l'objet de la présente description.

Typiquement, les éléments (5) décrits ci-dessus sont mélangés à des granulés de matière plastique et, éventuellement, à des pigments / colorants. Le mélange ainsi obtenu est fondu, puis injecté dans un moule adéquat. Selon un autre mode de réalisation, les éléments (5) sont mélangés à une résine thermoplastique ou thermodurcissable, des pigments / colorants pouvant être ajoutés, le mélange étant ensuite coulé ou moulé dans un moule adéquat.

Pour un substrat composé de plusieurs couches ainsi que précédemment décrit et par exemple illustré à la figure 3, on procédera à la réalisation d'une première couche selon l'un des procédés décrits ci-dessus, puis une deuxième couche également obtenue selon l'un desdits procédés sera surmoulée à ladite première couche, l'opération pouvant d'ailleurs être renouvelée en fonction du nombre de couches souhaitées. Selon le cas, les éléments (5) seront présents ou non dans chacune des couches, avec la même concentration ou une concentration différente.

Lorsque le matériau faisant l'objet de la présente invention est un élément d'optique tel que prédéfini, les caractéristiques des éléments (5) - c'est-à-dire leur taille, leur forme, leur composition et leur concentration, telles que ces caractéristiques ont été décrites plus haut à titre préférentiel - tiennent compte de la teinte dudit élément d'optique, de son épaisseur, et de son éventuel traitement de surface, de façon à ce que l'élément d'optique final respecte les normes solaires. Ainsi, les éléments d'optique selon la présente invention intégrés par exemple dans des lunettes solaires respectent les limitations de diffusion lumineuse, n'altèrent pas la vision du porteur et sont adaptés à la conduite automobile ; de façon plus générale, ces éléments d'optique satisfont aux mêmes exigences que les éléments d'optique solaires standards. De même, les éléments d'optique selon la présente invention répondent aux caractéristiques décrites ci-dessus et satisfont toutes les normes relatives aux éléments d'optique solaires, en particulier s'agissant de la lumière diffusée selon la norme EN 1836:2006 ; le principal défaut des éléments d'optique contenant des inclusions classiques est de ne pas respecter cette norme, de tels oculaires ne répondant alors pas auxdites normes relatives aux éléments d'optique solaires. De façon plus générale, les éléments d'optique réalisés selon la présente invention répondent aux normes françaises et internationales de « Protection de l'oeil ».

D'autres variantes pourront être envisagées pour les éléments d'optique ou substrats selon la présente invention ; ainsi, selon l'une de ces variantes concernant les éléments d'optique, un traitement de surface desdits éléments d'optique sera appliqué auxdits éléments d'optique du côté du porteur de ces derniers et/ou du côté de l'observateur, par exemple afin de rendre l'effet de scintillement encore plus intense. Les substrats selon la présente invention pourront être traités de la même façon.

## Revendications

1. Verre de lunettes ou de visières pour la protection des yeux ou la correction de la vue destiné à être placé devant les yeux de l'utilisateur et constitué d'un substrat composé d'un matériau dans le volume duquel sont répartis des éléments transparents et réfléchissant, ces éléments étant des paillettes, **caractérisé en ce que** lesdits éléments ont une forme oblongue ayant une largeur comprise entre 10 et 30 microns et une longueur comprise entre 100 et 300 microns, pour une épaisseur de 0,5 à 1,5 micron, lesdits éléments présentant une concentration dans le substrat de quelques ppm à quelques dizaines de ppm par rapport au poids du matériau constituant ledit substrat, et lesdits éléments étant répartis de façon aléatoire dans le volume dudit substrat, y compris dans le champ visuel de l'utilisateur.

2. Verre selon la revendication 1, **caractérisé en ce que** lesdits éléments ont subi un traitement de surface afin de les rendre davantage réfléchissants à la lumière.

3. Verre selon l'une des revendications 1 ou 2, **caractérisé en ce que** lesdits éléments ont une largeur de 20 microns environ et une longueur de 200 microns environ, l'épaisseur étant de 1 micron environ.

4. Verre selon l'une quelconque des revendications 1 à 3, **caractérisé en ce que** lesdits éléments présentent une concentration dans le substrat d'une dizaine de ppm.

5. Verre selon l'une quelconque des revendications 1 à 4, **caractérisé en ce que** lesdits éléments présentent à leur surface un dépôt d'au moins un oxyde métallique.

6. Verre selon l'une quelconque des revendications 1 à 5, **caractérisé en ce que** lesdits éléments sont constitués de borosilicate de calcium et d'aluminium.

7. Verre selon l'une quelconque des revendications 1 à 6, **caractérisé en ce que** lesdits éléments sont uniformément répartis au sein dudit substrat.

8. Verre selon l'une quelconque des revendications 1 à 7, **caractérisé en ce que** ledit substrat est composé d'une pluralité de couches.

9. Verre selon la revendication 8 **caractérisé en ce que** lesdits éléments sont regroupés dans la couche située du côté de l'observateur dudit substrat.

10. Procédé d'obtention du verre selon l'une quelconque des revendications 1 à 7, **caractérisé en ce que** lesdits éléments sont mélangés à des granulés de matière plastique, le mélange ainsi obtenu étant fondu, puis injecté dans un moule adéquat.

11. Procédé d'obtention du verre selon l'une quelconque des revendications 1 à 7, **caractérisé en ce que** lesdits éléments sont mélangés à une résine thermoplastique ou thermodurcissable, le mélange ainsi obtenu étant ensuite coulé ou moulé dans un moule adéquat.

12. Procédé d'obtention du verre selon l'une des revendications 8 ou 9, **caractérisé en ce qu'**une première couche est obtenue selon le procédé de l'une des revendications 10 ou 11, au moins une autre couche étant surmoulée à ladite première couche.

13. Procédé selon l'une quelconque des revendications 10 à 12 **caractérisé en ce que** des pigments / colorants sont ajoutés.

## Claims

1. Spectacle or visor glass for protecting the eyes or correcting eyesight intended to be placed in front of the eyes of the user and made up of a substrate consisting of a material in the bulk of which are distributed transparent and reflective elements, these elements being flakes, **characterized in that** said elements have an oblong shape with a width comprised between 10 and 30 microns and a length comprised between 100 and 300 microns, for a thickness from 0.5 to 1.5 microns, said elements having a concentration in the substrate from a few ppm to a few tens of ppm are based on the weight of the material making up said substrate, and said elements being randomly distributed in the bulk of said substrate, including in the field of vision of the user.

2. The glass according to claim 1, **characterized in that** said elements have undergone a surface treatment in order to make them more reflective towards light.

3. The glass according to one of claims 1 or 2, **characterized in that** said elements have a width of about 20 microns and a length of about 200 microns, the thickness being of about 1 micron.

4. The glass according to one of claims 1 to 3, **characterized in that** said elements have a concentration in the substrate of about ten ppm.

5. The glass according to one of claims 1 to 4, **characterized in that** said elements have at their surface a deposit of at least one metal oxide.

6. The glass according to one of claims 1 to 5, **characterized in that** said elements consist of calcium and aluminium borosilicate.

7. The glass according to any of claims 1 to 6, **characterized in that** said elements are uniformly distributed within said substrate.

8. The glass according to any of claims 1 to 7, **characterized in that** said substrate consists of a plurality of layers.

9. The glass according to claim 8, **characterized in that** said elements are grouped in the layer located on the side of the observer of said substrate.

10. A method for obtaining the glass according to any of claims 1 to 7, **characterized in that** said elements are mixed with plastic material granules, the thereby obtained mixture being melted and then injected into an adequate mold.

11. A method for obtaining the glass according to any of claims 1 to 7, **characterized in that** said elements are mixed with a thermoplastic or thermosetting resin, the thereby obtained mixture then being cast or molded in an adequate mold.

12. A method for obtaining the glass according to any of claims 8 or 9, **characterized in that** a first layer is obtained according to the method of one of claims 10 or 11, at least one other layer being overmolded to said first layer.

13. The method according to any of claims 10 to 12, **characterized in that** pigments/coloring agents are added.

## Patentansprüche

1. Brillen- oder Visierglas zum Schutz der Augen oder zur Sichtkorrektur, das dazu bestimmt ist, vor den Augen des Benutzers platziert zu sein und aus einem Substrat besteht, das aus einem Werkstoff besteht, in dessen Volumen transparente und reflektierende Elemente verteilt sind, wobei diese Elemente Plättchen sind, **dadurch gekennzeichnet, dass** die Elemente eine längliche Form mit einer Breite zwischen 10 und 30 Mikron inklusive und eine Länge zwischen 100 und 300 Mikron inklusive bei einer Dicke von 0,5 bis 1,5 Mikron haben, wobei die Elemente eine Konzentration in dem Substrat von einigen ppm bis zu einigen Dutzend ppm im Verhältnis zum Gewicht des Werkstoffs, der das Substrat bildet, haben und die Elemente zufällig in dem Volumen des Substrats verteilt sind, einschließlich im Blickfeld des Benutzers.

2. Glas nach Anspruch 1, **dadurch gekennzeichnet, dass** die Elemente einer Oberflächenbearbeitung unterzogen wurde, um sie noch lichtreflektierender zu gestalten.

3. Glas nach einem der Ansprüche 1 oder 2, **dadurch gekennzeichnet, dass** die Elemente eine Breite von zirka 20 Mikron und eine Länge von zirka 200 Mikron haben, wobei die Dicke zirka 1 Mikron beträgt.

4. Glas nach einem der Ansprüche 1 bis 3, **dadurch gekennzeichnet, dass** die Elemente eine Konzentration in dem Substrat von einem Zehntel ppm aufweisen.

5. Glas nach einem der Ansprüche 1 bis 4, **dadurch gekennzeichnet, dass** die Elemente auf ihrer Oberfläche eine Ablagerung von mindestens einem Metalloxid aufweisen.

6. Glas nach einem der Ansprüche 1 bis 5, **dadurch gekennzeichnet, dass** die Elemente aus Kalzium- und Aluminiumborosilikat bestehen.

7. Glas nach einem der Ansprüche 1 bis 6, **dadurch gekennzeichnet, dass** die Elemente gleichmäßig in dem Substrat verteilt sind.

8. Glas nach einem der Ansprüche 1 bis 7, **dadurch gekennzeichnet, dass** das Substrat aus einer Vielzahl von Schichten zusammengesetzt ist.

9. Glas nach Anspruch 8, **dadurch gekennzeichnet, dass** die Elemente in der Schicht angeordnet sind, die sich auf der Seite des Beobachters des Substrats befindet.

10. Verfahren zur Herstellung des Glases nach einem der Ansprüche 1 bis 7, **dadurch gekennzeichnet, dass** die Elemente mit Kunststoffgranulaten gemischt sind, wobei das derart hergestellte Gemisch geschmolzen und dann in eine entsprechende Form gespritzt wird.

11. Verfahren zur Herstellung des Glases nach einem der Ansprüche 1 bis 7, **dadurch gekennzeichnet, dass** die Elemente mit einem thermoplastischen oder duroplastischen Harz gemischt sind, wobei das derart hergestellte Gemisch dann in eine entsprechende Form gegossen oder geformt wird.

12. Verfahren zur Herstellung des Glases nach einem der Ansprüche 8 oder 9, **dadurch gekennzeichnet, dass** eine erste Schicht nach dem Verfahren nach einem der Ansprüche 10 oder 11 hergestellt wird, wobei eine andere Schicht auf die erste Schicht aufgeformt wird.

13. Verfahren nach einem der Ansprüche 10 bis 12, **dadurch gekennzeichnet, dass** Pigmente / Farbstoffe hinzugefügt sind.
